Europäisches Patentamt

European Patent Office

Office européen des brevets

(19)

(11) **EP 0 827 335 A2**

(12) **EUROPEAN PATENT APPLICATION**

(43) Date of publication:
04.03.1998 Bulletin 1998/10

(51) Int. Cl.$^6$: **H04N 1/64**

(21) Application number: 97114855.6

(22) Date of filing: 27.08.1997

(84) Designated Contracting States:
AT BE CH DE DK ES FI FR GB GR IE IT LI LU MC NL PT SE

(30) Priority: 28.08.1996 JP 226758/96

(71) Applicant:
SANYO ELECTRIC Co., Ltd.
Moriguchi-shi, Osaka (JP)

(72) Inventor: Haruki, Toshinobu
Kyotanabe-shi, Kyoto (JP)

(74) Representative:
Glawe, Delfs, Moll & Partner
Patentanwälte
Postfach 26 01 62
80058 München (DE)

(54) **Digital camera**

(57) A digital camera (10) includes a microcomputer (24) which expands compressed image data stored in a flash memory so as to generate expanded image data, that is, YUV data. The microcomputer also calculates a kind of color data out of "R", "G" and "B" on the basis of the generated YUV data. Accordingly, the microcomputer repeats such expansion processing steps for three times so as to generate all the color data of "R", "G" and "B". The R data, the G data and the B data are sequentially written into a first memory (20) capable of storing a kind of the color data one by one, and each of the color data is read out from the first memory column by column in a vertical direction by a vertical reading circuit before another kinds of color data is written into first memory.

F I G. 1

10

EP 0 827 335 A2

## Description

## BACKGROUND OF THE INVENTION

Field of the invention

The present invention relates to a digital camera. More specifically, the present invention relates to a digital still camera in which compressed image data stored in a storage medium is expanded such that expanded image data including a plurality of image quality associated components is outputted to a printer.

Description of prior art

In a first kind of conventional digital still camera, the compressed image data stored in the storage medium is expanded block by block, and the expanded image data, that is, YUV data obtained in such a manner are temporarily stored in a buffer memory. Then, the YUV data are read out line by line in a horizontal direction by a horizontal reading circuit, and outputted to the printer.

However, in a sublimation type thermal page printer used for printing a full-color natural image, a plurality of print heads are arranged in a vertical direction generally because of reduction of a cost of the print heads. Accordingly, it is needed to provide image data to the print heads while the image data is scanned in the vertical direction, and therefore, a memory having a capacity of one page must be provided in the printer. Furthermore, it is needed to apply respective color components included in RGB data generated by converting the YUV data screen by screen.

On the other hand, in a second kind of conventional digital still camera, a buffer memory capable of storing the RGB data equal to one screen is provided, and the RGB data generated by converting the expanded image data, that is, the YUV data are sequentially written into the buffer memory. When writing of the RGB data of one screen are completed, a vertical reading circuit reads out the RGB data in the vertical direction for each of the color components.

However, the second digital still camera, though it is possible to output each of the R data, the G data and the B data screen by screen, the buffer memory needs a size capable of storing all the RGB data. This size is three times as large as a size of the buffer memory provided in the first digital still camera.

## SUMMARY OF THE INVENTION

Therefore, a principal object of the present invention is to provide a novel digital camera.

Another object of the present invention is to provide a digital camera capable of outputting image data scanned in a vertical direction to a printer with using a memory having a small capacity.

According to the present invention, a digital camera comprises: a first generation means for sequentially generating a plurality of image quality associated signals on the basis of a compressed image signal stored in a storage medium; a memory which stores one of the plurality of image quality associated signals; a first writing means for sequentially writing the plurality of image quality associated signals into the memory; and a reading means for reading the image quality associated signal stored in the memory in a vertical direction.

In the present invention, the plurality of image quality associated signals are sequentially generated on the basis of the compressed image signal stored in the storage medium, and the plurality of image quality associated signals are sequentially written into the memory which stores one of the image quality associated signals. Thereafter, the image quality associated signal stored in the memory is read out in the vertical direction.

According to the present invention, since the plurality of image quality associated signals are sequentially one by one written into the memory having a capacity equal to one image quality associated signal, and the image quality associated signal stored in the memory is read out in the vertical direction prior to writing of another kind of the image quality associated signal, it is possible to reduce a capacity of the memory.

In an aspect of the present invention, the compressed image signal stored in the storage medium is expanded by times equal to the number of the image quality associated signals, and the respective image quality associated signals are individually detected from a plurality of expanded image signals obtained in such a manner.

In an embodiment of the present invention, the expanded image signal includes a Y component, a U component and a V component, and an R component, a G component and a B component are individually detected as the image quality associated signals on the basis of such components.

In another aspect of the present invention, a still image signal generated by photographing an object has a size equal to one of the image quality associated signals, and the still image signal is temporarily written into the memory. Then, the compressed image signal is generated by compressing the still image signal, and the compressed image signal is stored in the storage medium.

The above described objects and other objects, features, aspects and advantages of the present invention will become more apparent from the following detailed description of the present invention when taken in conjunction with the accompanying drawings.

## BRIEF DESCRIPTION OF THE DRAWINGS

Figure 1 is a block diagram showing one embodiment of the present invention;
Figure 2 is an illustrative view showing a color filter;
Figure 3 is a flowchart showing a portion of an operation of Figure 1 embodiment;

Figure 4 is an illustrative view showing pixel blocks;

Figure 5 is an illustrative view showing a portion of the operation of the Figure 1 embodiment;

Figure 6 is an illustrative view showing a reading operation in the vertical direction;

Figure 7 is a flowchart showing another portion of the operation of the Figure 1 embodiment; and

Figure 8 is a block diagram showing another embodiment of the present invention.

## DETAILED DESCRIPTION OF THE PREFERRED EMBODIMENT

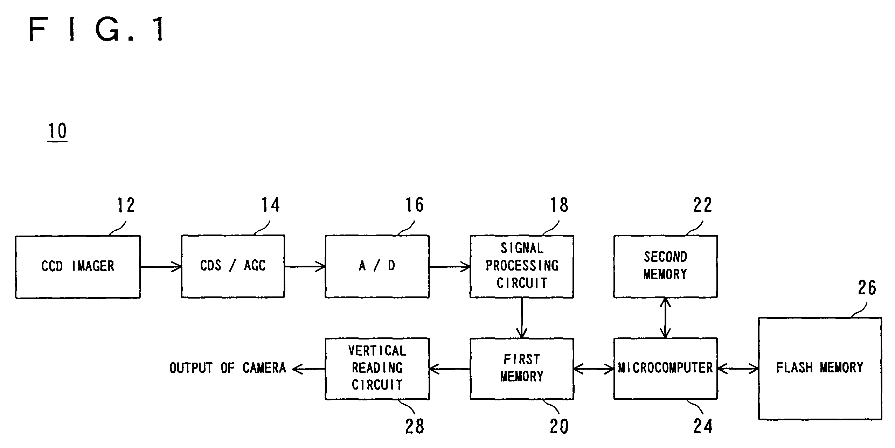

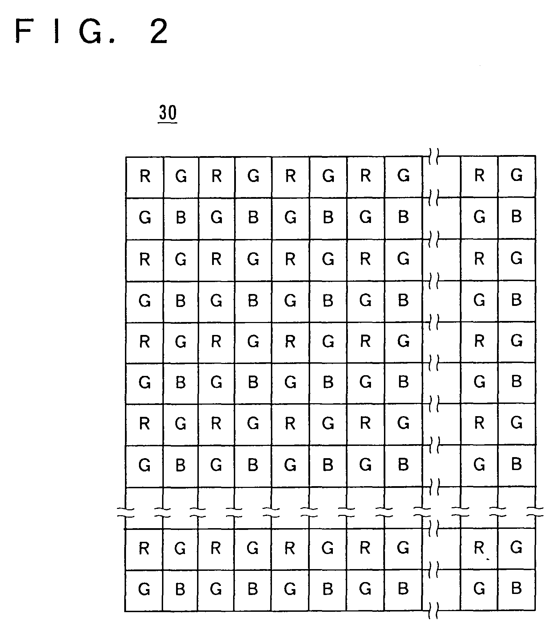

A digital still camera 10 of this embodiment shown in Figure 1 includes a CCD imager 12 for photographing an object. A still image signal outputted from the CCD imager 12 is subjected to a noise reduction and a level adjustment in a CDS/AGC circuit 14, and a still image signal to which such operations are performed is converted into a digital signal by an A/D converter 16. Image data outputted from the A/D converter 16 is thereafter subjected to well-known operations such as a white balance adjustment, a gamma correction and etc. in a signal processing circuit 18, and an output of the signal processing circuit 18 is stored in a first memory 20 which functions as a temporary storage. In addition, a color filter 30 having filter elements of "R", "G" and "B" as shown in Figure 2 is provided onto a front side of the CCD imager 12, and light reception elements are formed in the CCD imager 12 in correspondence to the filter elements.

The number of pixels included in the image data stored in the first memory 20 is coincident with the number of pixels of the CCD imager 12, and respective pixel data has one color component in correspondence with the filter elements of the color filter 30 out of "R", "G" and "B".

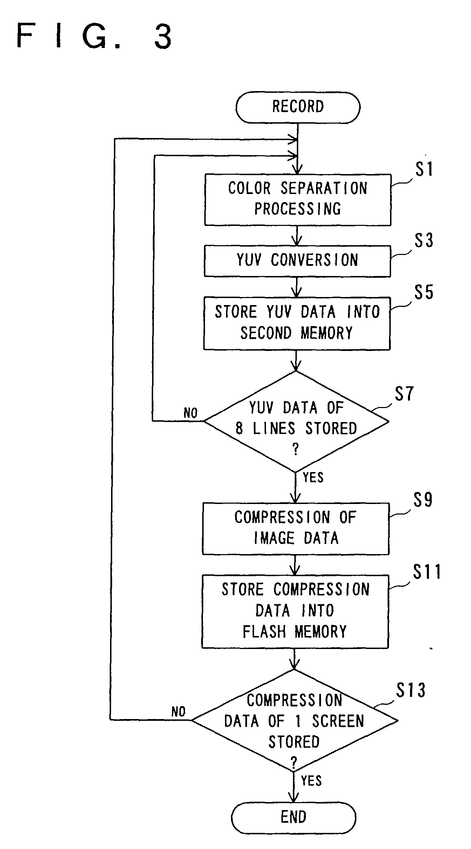

When all the pixel data constituting one screen is completely stored in the first memory 20, the image data is read out from the first memory 20 by the microcomputer 24, and subjected to a series of operations such as a color separation, a YUV conversion and image compression in accordance with a flowchart shown in Figure 3 in a software manner.

First, the microcomputer 24 reads out pixel data of a noted pixel and pixel data of pixels surrounding the noted pixel from the first memory 20, and executes in a step S1 the color separation operation wherein two color components lacking at the respective pixels out of "R", "G" and "B" are interpolated by averaging color components having the same color at surroundings. For example, concerning a pixel corresponding to the filter element of "R", it is necessary to generate the G component and the B component. Accordingly, by averaging the pixel data obtained through the filter elements of "G" and "B" arranged near by the filter elements of "R", such an interpolation is performed. A similar operation is succeedingly performed, and therefore, the color components of "R" and "B" are generated at the respective pixels to which the filter element of "G" is arranged. By such the color separation operation, three color components of "R", "G" and "B", that is, RGB data can be obtained at the respective pixels.

When the color separation operation for the noted pixel is thus completed in such a manner, the microcomputer 24 in a step S3 substitutes obtained three primary color data into an equation (1) so as to convert the RGB data into luminance data Y, color difference data B - Y (= U) and R - Y (= V).

$$Y = 0.2990 \times R + 0.5870 \times G + 0.1140 \times B \quad (1)$$

$$U = -0.1684 \times R - 0.3316 \times G + 0.5000 \times B$$

$$V = 0.5000 \times R - 0.4187 \times G - 0.0813 \times B$$

When the YUV data is obtained as above, the microcomputer 24 stores the YUV data into a second memory 22 for each pixel in a step S5, and determines whether or not eight (8) lines of the YUV data have been completely stored in a step S7. If "NO" in this step, the microcomputer 24 returns back to the step S1, and repeats a series of operations from the color separation operation to the storing operation to the second memory 22 by times equal to a predetermined number of pixels. That is, defining the number of valid pixels in one line as "N", the series of operations described above is to be repeated by 8 × N times. In addition, the second memory 22 has a size capable of storing the YUV data associated with all the valid pixels included in 8 lines.

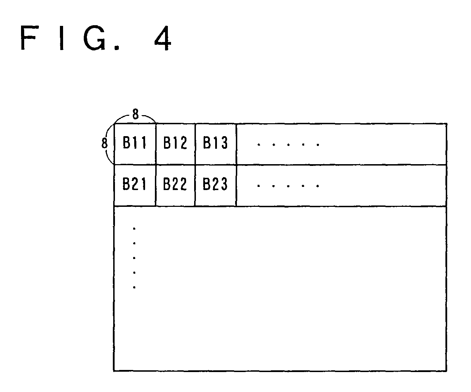

When the series of operations has been completed for the 8 lines, and the YUV data of all the valid pixels included in the 8 lines is stored in the second memory 22, the microcomputer 24 temporarily discontinues the series of operations from the color separation operation to the storing operation, and executes an image compression operation of the YUV data included in the second memory 22 in a step S9. Describing the image compression operation in detail, the microcomputer 24 divides the 8 lines of YUV data stored in the second memory 22 into a plurality of blocks Bij (i, j: integers) each of which has eight (8) pixels in both the vertical direction and the horizontal direction as shown in Figure 4, and executes the image compression operation of the YUV data block by block in accordance with at the JPEG format. In the image compression operation of the JPEG format, each of the Y data, U data and V data is divided into the plurality of blocks, and a series of operations such as a two dimensional discrete cosine transformation (DCT), a quantization and two dimensional Huffman coding is performed for each block. Compressed image data finally obtained through the image compression operation including the series of operations is stored in a flash memory 26 at a succeeding stage block by block in a step S11.

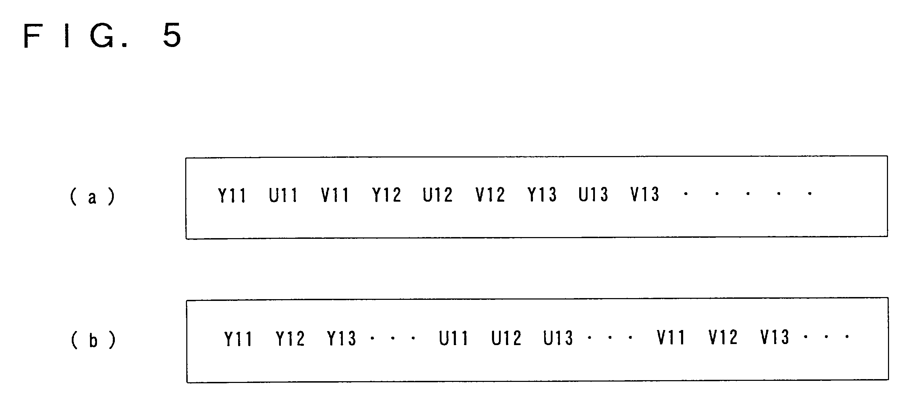

Furthermore, the image compression operation is executed block by block as shown in Figure 5(a). More specifically, when the compression operation of the Y data, the U data and the V data corresponding to a noted block has been completed, the compression operation of the Y data, the U data and the V data at a succeeding block is executed. In addition, "Yij", "Uij" and "Vij" shown in Figure 5(a) respectively denotes compressed Y data, compressed U data and compressed V data included in the block Bij.

If the 8 lines of YUV data stored in the second memory 22 is completely compressed, and the compressed image data is stored in the flash memory 26, the microcomputer 24 temporarily discontinues the image compression operation, and returns from a step S13 to the step S1. Then, the microcomputer 24 resumes the series of operations such as the color separation, the YUV conversion and the storing for succeeding 8 lines. If the YUV data of the 8 lines generated by such operations is stored in the second memory 22, the image compression operation is executed for the YUV data block by block. Such the operations are repeated, and the compressed image data of one screen is to be finally stored in the flash memory 26.

In addition, there is a screen by screen system in which Y data of all pixels included in one screen is precedingly generated and stored in the flash memory 26, and thereafter the U data of one screen and the V data of one screen are sequentially stored in the flash memory 26. However, since it is necessary to execute the color separation and the YUV conversion for three times for each data of "Y", "U" and "V" according to such a system, the system causes increasing of a processing time period. Accordingly, with considering the processing time period, a block by block system shown in Figure 5(a) is preferred to the screen by screen system.

In reproducing, the compressed image data stored in the flash memory 26 is expanded by the microcomputer 24 block by block. More specifically, the YUV data are restored for each block having 8 × 8 pixels, and the Y data, the U data and the V data associated with the same block, that is, 64 pixels' Y data, 64 pixels' U data and 64 pixels' V data are temporarily held in a RAM (not shown) provided in the microcomputer 24. Then, the YUV data of the same pixel is converted into the RGB data with using a predetermined equation. In addition, the microcomputer 24 calculates only one kind of color data out of the RGB data in response to an R writing mode, a G writing mode or a B writing mode. That is, the microcomputer 24 performs an image expansion operation by three times in correspondence to kinds of the color data, and individually calculates the R data, the G data and the B data from the respective expanded image data. In addition, the equation (1) is used as the predetermined equation for converting the YUV data into the RGB data, whereby "R", "G" and "B" are acquired by substituting values of the Y data, the U data and the V data into the equation (1).

Furthermore, each of the R data, the G data and the B data thus obtained are sequentially stored in the first memory 20 used for temporarily holding the image data outputted from the CCD imager 12 in photographing. That is, each of the R data, the G data and the B data has the same size as the image data stored in the first memory 20 in photographing.

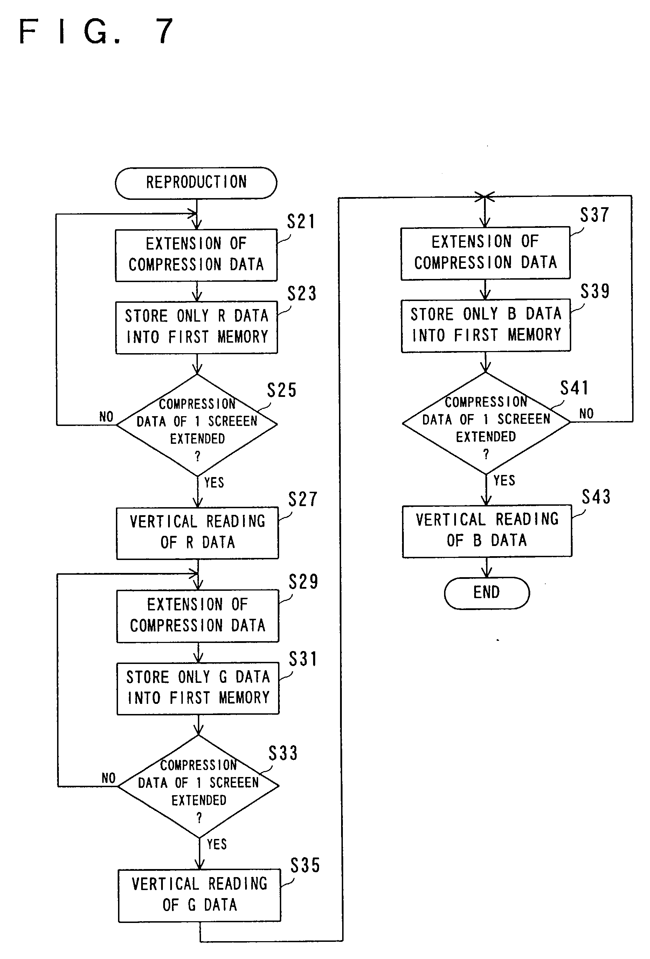

Succeedingly, an operation in reproducing is described with referring to a flowchart shown in Figure 7. The microcomputer 24 first reads out one block of compressed image data from the flash memory 26 in response to a reproduction instruction so as to extend the compressed image data in a step S21. At that time, the microcomputer 24 is in the R writing mode, and the microcomputer 24 calculates only the R data and stores the R data into the first memory 22 in a step S23. The microcomputer 24 determines whether or not the compressed image data equal to one screen has been completely expanded in a step S25, if "YES", the process proceeds to a step S27, and if "NO", the process returns back to the step S21. That is, the image expansion operation and a calculation operation of the R data are block by block executed for all the compressed image data constituting one screen stored in the flash memory 26, and at a time that such operations for one screen have been completed, all the R data equal to one screen is stored in the first memory 20.

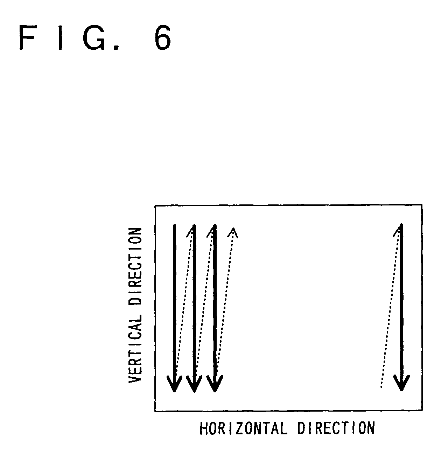

If the R data is completely stored in the first memory 20 in such manner, in the step S27, a vertical reading circuit 28 scans the first memory 20 in the vertical direction as shown in Figure 6, and reads out the R data column by column. Then, the read out R data is provided to a color printer (not shown) as an output of the camera 10.

When the reading has been completed, the microcomputer 24 again expands the one screen of compressed image data included in the flash memory 26 in a step S29, and simultaneously changes the writing mode from the R writing mode to the G writing mode. Then, the microcomputer 24 calculates block by block the G data from the YUV data, and stores the G data into the first memory 20. Accordingly, the R data stored in the first memory 20 is replaced with the G data pixel by pixel. The microcomputer 24 repeats the processes of the steps S29 to S33 so as to expand all blocks of compressed image data stored in the flash memory 26. If one screen of compressed image data is completely processed, the G data equal to one screen is stored in the first memory 20.

If storing of the G data is completed in the above described manner, the vertical reading circuit 28 sequentially reads out the G data in the first memory 20 in the vertical direction of the screen and provides the G data to the color printer as an output of the camera 10 in a step S35.

When the reading has been completed, the microcomputer 24 expands the one screen of compressed image data included in the flash memory 26 in a step S37, and simultaneously changes the writing mode from the G writing mode to the B writing mode. Then, the microcomputer 24 in a step S39 calculates the B data from the YUV data block by block, and stores the V data into the first memory 20. Accordingly, the G data in the first memory 20 is replaced with the 13 data pixel by pixel. The image expansion operation and the calculation operation of the B data for each block are also executed to all the compressed image data equal to one screen stored in the flash memory 26, and at a time that the operation for one screen is completed, all pixels of B data in one screen is stored in the first memory 20.

When such the a storing operation of the B data has been completed, in a step S43, the vertical reading circuit 28 sequentially reads out the B data from the first memory 20 in the vertical direction of the screen, and provides the B data to the color printer as an output of the camera 10.

Thus, the image expansion operation of the compressed image data is repeated for three times, and only one kind of color data is stored in the first memory 20 in each of the operations. Then, at every time that the writing of the color data is completed, the color data is read out column by column in the vertical direction. Therefore, it is possible to sequentially output the color data of one screen. The R data, the G data and the B data are sequentially applied to the color printer from the digital still camera 10 screen by screen as described above, and respectively converted into complementary color data associated with the inputted preliminary color data by a calculation circuit, and the complementary color data is applied to a plurality of print heads formed in a head unit, and ink amounts of "Cy", "Mg" and "Ye" being complementary colors of "R", "G" and "B" are determined. Now, the calculation circuit only detects complementary numbers of the respective R data, the G data and the B data as digital data so as to obtain the complementary color data thereof.

The head unit is provided with the plurality of print heads corresponding to the number of pixels in the vertical direction of one screen. That is, in a case where the number of the valid pixels in the vertical direction is "480", 480 print heads are formed in the head unit. Such print heads are arranged in one column in the vertical direction, and all the print heads are shifted in the horizontal direction as a one piece fashion when the head unit scans in the horizontal direction.

When the color printer receives the RGB data and prints a still image, the color printer operates as follows: The R data read out in the vertical direction and inputted pixel by pixel is first converted into Cy data, that is, the complementary color data of "R" in the calculation circuit, and the complementary color data is applied to the respective print heads pixel by pixel. The head unit executes a printing operation in accordance with the respective Cy data, and if the printing operation of each pixel constituting one column in the vertical direction is completed, the head unit is shifted by one step in the horizontal direction from an initial position. Then, the printing of each pixel constituting the succeeding one column in the vertical direction is executed, and thereafter, the head unit is shifted by one step in the horizontal direction. Then, the printing of each pixel constituting the succeeding one column in the vertical direction is executed, and thereafter, the head unit is shifted by one step in the horizontal direction. Hereafter, similar operations are repeated, and at a time that the head unit is shifted by the number of steps equal to the number of the valid pixels in the horizontal direction, the complementary color data of "R" equal to one screen is to be completely printed.

If the printing based on the R data is completed in the above described manner, the head unit is returned back to the initial position, and then, the vertical reading circuit 28 executes reading of the G data in the vertical direction. Accordingly, the G data is sequentially inputted to the color printer column by column instead of the R data, the complementary color data of "G" is generated by the calculation circuit, and the printing operation of the complementary color data is executed. If the printing operation is executed with using an ink of "Mg" on the basis of one column of Mg data, that is, the complementary color data of "G", the head unit is shifted by one step from the initial position in the horizontal direction, and thereafter, the head unit is shifted by one step at every time that pixels of one column are completely printed. If scanning of the head unit in the horizontal direction is thus completed, one screen of the complementary color data of "G" is completely printed.

When the printing based on the G data has been completed as described above, the head unit is again returned back to the initial position, and succeedingly, the vertical reading circuit 28 performs reading of the B data column by column in the vertical direction. Accordingly, the B data is succeedingly inputted to the color printer instead of the G data, and then, Ye data, that is, the complementary color data of "B" is generated by the calculation circuit, and the complementary color data is applied to the print heads. If the printing operation is executed with using an ink of "Ye" on the basis of the complementary color data of "B" on a paper on which the complementary color data of "R" and "G" has been printed, and thus, one column of pixels is completely printed, the head unit is shifted by one step from the initial position in the horizontal direction. Thereafter, the head unit is shifted in the horizontal direction step by step at every time that the printing operation of one column of pixels is completed. At a time that the scanning of the head unit in the horizontal direction is thus completed, one screen of the complementary color data of "B" is completely printed.

When the head unit has been scanned in the horizontal direction for three times as described above, the printing operation is completed on the basis of the three color components of "R", "G" and "B" constituting the image data, whereby a paper on which a still image has been printed is obtained.

According to this embodiment, though it is necessary to repeat the image expansion operation for three times, and therefore, a little long time is needed for the expansion operation, an actual printing time period is much longer than the image expansion time period at a side of the camera, and therefore, there is no problem such that the printer waits a completion of the image expansion operation. That is, during a time from a timing that the vertical reading circuit 28 reads out the R data stored in the first memory 20 in the vertical direction for a first image expansion operation so as to transfer the R data to the color printer to a timing that the print heads of the color printer complete the printing operation on the basis of the R data, a second image expansion operation is executed in the camera, and the G data is stored in the first memory 20. Accordingly, it is possible to rapidly shift to the printing operation of the G data after the printing operation of the R data is completed.

Furthermore, though one of the R signal, the G signal and the B signal is detected at the respective valid pixels of the CCD imager 12, and lacking two color signals are generated by the color separation as the interpolation in this embodiment, as the applicant of this case precedingly suggests in Japanese Laying-open No. 7-38632, the three primary color signal of "R", "G" and "B" may be generated at a position that a pixel is shifted for a half length of one pixel in the horizontal direction and the vertical direction on the basis of color signals of surrounding pixels instead of the color separation. In this case, in the succeeding signal processing, the position that the pixel is shifted for the half length is regarded as a pixel.

Evenmore, though the color filter in which the filter elements of "R", "G" and "B" are arranged in mosaic-like is provided at the CCD imager 12, the color filter is not restricted to such a color filter as the filter elements are arranged in mosaic-like. Fuirthermore, it is needless to say that a complementary color filter can be used instead of the primary color filter.

In addition, in the YUV conversion executed before the image compression operation, while the Y data is generated at all the pixel, each of the U data and the V data may be thinned-out into 1/2 in the horizontal direction. This is to utilize a characteristic that though human eyes are sensitive to a change of a luminance, the human eyes are relatively insensitive to a change of a color. If each of the U data and the V data is subjected to the thinning-out operation as described above, the respective U data and V data can be compressed at every two blocks adjacent in the horizontal direction in the image compression operation, whereby it is possible to reduce a storage capacity of the flash memory 26. In addition, at a time that the YUV data is inverted to the RGB data in the image expansion operation, since the Y data and the V data is only obtained at every other pixel in the horizontal direction due to the interpolation operation, it is needed to use one pixel of the compressed data for adjacent two pixels.

Evenmore, though a primary color filter is used as the color filter of the CCD imager 12, and the YUV data generated by converting the RGB data are stored in the flash memory 26, the digital still camera can be constituted such as the RGB data are stored in the flash memory 26. In this case, the conversion operation and the inversion operation between the YUV data and the RGB data is not needed.

Furthermore, according to this embodiment, the series of operation from the color separation to the image compression and the series of operations from the image expansion to the inversion are executed by a single microcomputer in a software manner, it is needless to say that such processing operations can be executed by specialized circuits.

Evenmore, according to this embodiment, since one kind of color data is generated by one time image expansion operation, and the color data has the same size as the image data obtained from the signal processing circuit 18 in photographing, the first memory 20 for a temporarily storage can be used for storing the color data obtained by the image expansion operation. That is, it is possible to read out one screen of the color data column by column in the vertical direction without providing a memory exclusively used for the reading and a memory for the respective color data.

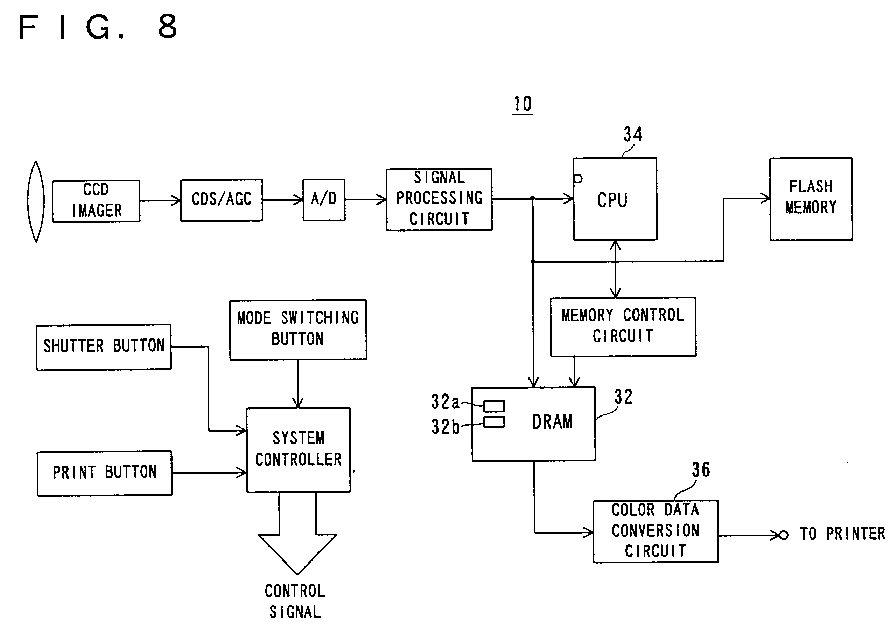

The present invention can be implemented by a digital still camera 10 constituted as shown in Figure 8. In this digital still camera 10, a memory area 32a formed in a DRAM 32 is used for holding the image data generated in photographing and holding one kind of color data generated in reproducing. Furthermore, a work area 32b is used for compression of the image data and expansion of the compressed image data. Evenmore, a CPU 34 executes the same processing as the processing shown in Figure 3 and Figure 7, and a color data conversion circuit 36 converts the RGB data into the complementary color data and outputs the complementary color data to the color printer.

Furthermore, although the embodiments according to the present invention were described for the digital still camera, it is needless to say that the present can be also applied to other products such as digital video camera (digital movie) and etc.

Although the present invention has been described and illustrated in detail, it is clearly understood that the same is by way of illustration and example only and is not to be taken by way of limitation, the spirit and scope of the present invention being limited only by the terms of the appended claims.

**Claims**

1.   A digital camera, comprising:

a first generation means for sequentially generating a plurality of image quality associated signals on the basis of a compressed image signal stored in a storage medium;

a memory which stores one of said plurality of image quality associated signals;

a first writing means for sequentially writing one of said plurality of image quality associated signals into said memory; and

a reading means for reading the image quality associated signals stored in the said memory in the vertical direction before another image quality associated signal is written in said memory by said first writing means.

2. A digital camera according to claim 1, wherein said fist generation means includes an expansion means for expanding said compressed image signal for times equal to the number of the image quality associated signals, and a detection means for individually detecting said plurality of image quality associated signals from a plurality of expanded image signal expanded by said expansion means.

3. A digital camera according to claim 2, wherein said expanded image signal includes a Y signal, a U signal and a V signal, and said detection means individually detects an R signal, a G signal and a B signal as said plurality of image quality associated signals on the basis of said Y signal, said U signal and said V signal.

4. A digital camera according to claim 1, further comprising:

a second generation means for photographing an object and generating a still image signal having a size equal to one of said plurality of image quality associated signals;

a second writing means for writing said still image signal into said memory;

a compression means for compressing said still image signal so as to generate said compressed image signal; and

a storing means for storing said compressed image signal into said storage medium.

5. A digital camera according to claim 4, wherein said expansion means and said compression means are included in a microcomputer.

# FIG. 1

EP 0 827 335 A2

10

```
┌──────────────┐    ┌──────────────┐    ┌──────────────┐    ┌──────────────┐         ┌──────────────┐
│  12          │    │  14          │    │  16          │    │  18          │         │  22          │
│              │    │              │    │              │    │   SIGNAL     │         │              │
│ CCD IMAGER   │──▶ │  CDS / AGC   │──▶ │    A / D     │──▶ │ PROCESSING   │         │   SECOND     │
│              │    │              │    │              │    │   CIRCUIT    │         │   MEMORY     │
└──────────────┘    └──────────────┘    └──────────────┘    └──────────────┘         └──────────────┘
```

SIGNAL PROCESSING CIRCUIT

SECOND MEMORY

VERTICAL READING CIRCUIT

FIRST MEMORY

MICROCOMPUTER

FLASH MEMORY

OUTPUT OF CAMERA

28    20    24    26

# F I G. 2

30

# F I G. 3

```
                    ┌──────────────┐
                    │    RECORD     │
                    └──────┬───────┘
                           │
    ┌──────────────────────┤
    │  ┌───────────────────┤
    │  │             ┌──────▼───────────┐  S1
    │  │             │ COLOR SEPARATION │
    │  │             │   PROCESSING     │
    │  │             └──────┬───────────┘
    │  │             ┌──────▼───────────┐  S3
    │  │             │ YUV CONVERSION   │
    │  │             └──────┬───────────┘
    │  │             ┌──────▼───────────┐  S5
    │  │             │ STORE YUV DATA INTO│
    │  │             │  SECOND MEMORY    │
    │  │             └──────┬───────────┘
    │  │                    │
    │  │        NO   ┌──────▼───────┐  S7
    │  └─────────────┤  YUV DATA OF  │
    │                │ 8 LINES STORED │
    │                │      ?         │
    │                └──────┬───────┘
    │                       │ YES
    │                ┌──────▼───────────┐  S9
    │                │ COMPRESSION OF   │
    │                │   IMAGE DATA     │
    │                └──────┬───────────┘
    │                ┌──────▼───────────┐  S11
    │                │ STORE COMPRESSION│
    │                │   DATA INTO      │
    │                │  FLASH MEMORY    │
    │                └──────┬───────────┘
    │                       │
    │          NO    ┌──────▼───────┐  S13
    └────────────────┤ COMPRESSION   │
                     │ DATA OF 1 SCREEN│
                     │    STORED      │
                     │      ?         │
                     └──────┬───────┘
                            │ YES
                     ┌──────▼───────┐
                     │     END       │
                     └──────────────┘
```

# F I G. 4

# F I G. 5

EP 0 827 335 A2

( a )

Y11   U11   V11   Y12   U12   V12   Y13   U13   V13  ·  ·  ·  ·  ·  ·

( b )

Y11   Y12   Y13 · · ·   U11   U12   U13 · · ·   V11   V12   V13 · · ·

# FIG. 6

VERTICAL DIRECTION

HORIZONTAL DIRECTION

# FIG. 7

```
        ( REPRODUCTION )
                │
                ▼                          S21
      ┌──────────────────────┐
      │   EXTENSION  OF       │
      │  COMPRESSION  DATA    │
      └──────────────────────┘
                │                          S23
      ┌──────────────────────┐
      │  STORE  ONLY  R  DATA │
      │  INTO  FIRST  MEMORY  │
      └──────────────────────┘
                │
                ▼            S25
             ◇ COMPRESSION ◇
    NO ─────  DATA OF 1 SCREEEN
             EXTENDED
                 ?
                │ YES
                ▼                          S27
      ┌──────────────────────┐
      │   VERTICAL  READING   │
      │      OF  R  DATA      │
      └──────────────────────┘
                │
                ▼                          S29
      ┌──────────────────────┐
      │   EXTENSION  OF       │
      │  COMPRESSION  DATA    │
      └──────────────────────┘
                │                          S31
      ┌──────────────────────┐
      │  STORE  ONLY  G  DATA │
      │  INTO  FIRST  MEMORY  │
      └──────────────────────┘
                │
                ▼            S33
             ◇ COMPRESSION ◇
    NO ─────  DATA OF 1 SCREEEN
             EXTENDED
                 ?
                │ YES
                ▼                          S35
      ┌──────────────────────┐
      │   VERTICAL  READING   │
      │      OF  G  DATA      │
      └──────────────────────┘


                                           S37
      ┌──────────────────────┐
      │   EXTENSION  OF       │
      │  COMPRESSION  DATA    │
      └──────────────────────┘
                │                          S39
      ┌──────────────────────┐
      │  STORE  ONLY  B  DATA │
      │  INTO  FIRST  MEMORY  │
      └──────────────────────┘
                │
                ▼            S41
             ◇ COMPRESSION ◇
             DATA OF 1 SCREEEN  ───── NO
             EXTENDED
                 ?
                │ YES
                ▼                          S43
      ┌──────────────────────┐
      │   VERTICAL  READING   │
      │      OF  B  DATA      │
      └──────────────────────┘
                │
                ▼
             (  END  )
```

# F I G. 8

EP 0 827 335 A2